# EUROPEAN PATENT SPECIFICATION

(11) **EP 0 548 465 B1**
(45) Date of publication and mention of the grant of the patent: **08.07.1998**
(21) Application number: 92114251.9
(22) Date of filing: 20.08.1992
(51) Int. Cl.: G11B 17/04, G11B 17/028, G11B 7/095

(54) **Laser disk player**
Laser-Plattenwiedergabegerät
Lecteur de disque laser

(30) Priority: 23.12.1991 KR 9123948
(43) Date of publication of application: 30.06.1993
(73) Proprietor: SAMSUNG ELECTRONICS CO., LTD., Suwon-City, Kyounggi-Do 441-370 (KR)
(72) Inventor: Lee, Chung Geu, Suwon-shi Kyonggi-do (KR)
(74) Representative: Grünecker, Kinkeldey, Stockmair & Schwanhäusser Anwaltssozietät

(56) References cited:
- EP-A- 0 261 384
- EP-A- 0 380 238
- EP-A- 0 400 949
- PATENT ABSTRACTS OF JAPAN vol. 13, no. 131 (P-850)31 March 1989 & JP-A-63 300 477 (SONY CORP.) 7 December 1988
- PATENT ABSTRACTS OF JAPAN vol. 17, no. 87 (P-1491)22 February 1993 & JP-A-42 086 761 (SONY CORP.) 12 October 1992
- PATENT ABSTRACTS OF JAPAN vol. 17, no. 311 (P-1556)14 June 1993 & JP-A-50 028 611 (PIONEER ELECTRONIC CORP.) 5 February 1993

## Description

### BACKGROUND OF THE INVENTION

The present invention relates to laser disk players for playing back informations recorded on a disk.

In general, laser disk players in which an optical pickup projects a laser beam on a disk and detects the reflected beam to read out the recorded informations, employ a spindle motor for rotating a disk and a feeding motor for moving an optical pickup of an optical apparatus. In the case of horizontal loading laser disk players, especially, a loading motor for sliding the disk tray is also used. the disk is tilted due to deformations such as bending according to operational environments or mechanical chucking state. This makes it difficult to accurately play back informations recorded on the disk. Accordingly, in order to keep a distance between the disk and the optical pickup constant, a motor for tilting the optical apparatus is further necessary. Since four motors are employed for performing each function while playing back the recorded informations in the laser disk players, mechanical constructions become very complicated and the production cost is raised, thereby degrading the productivity and yeilding many problems in making the laser disk players compact.

EP-A-0 261 384 discloses an apparatus for reproducing selectively loaded disks of different diameters with a disk tray movable along tray carriers wherein on one side a tray transporter is mounted to the disk tray and on the other side a guide member is inserted in a guide groove of the disk tray. The tray carriers can be raised or lowered by guiding slide cam plates along side plates. To move the slide cam plates at their lower edges, coupling pins are formed that are in engagement with recesses of a control lever. This control lever is pivotally supported about a pin and is connected to an elongate slide including the follower pin inserted in a first cam groove.

A chuck assembly is pivotally supported by lugs at a top edge of the tray carrier. For correction of skew, a skew servo device is used for pivoting an optical pickup apparatus around a skew axle which servo device comprises a tiltable plate with a cam follower pin at its lower side that is inserted in a second cam groove of the control cam disk.

EP-A-0 380 238 discloses an optical disk reproducing apparatus in which a tray and an attaching plate for fixing a disk to a turntable are separately lowered and raised. For tilting an optical pickup apparatus, an engaging plate is used which is linearly movable and has the pin projecting on its lower face inserted into a cam groove. According to the position of the pin along the cam groove, the engaging plate is moved rightward or leftward. Moreover, the cam gear acts as a drive member to raise and lower the clamper and hold the clamper in position.

EP-A-0 400 949 discloses a disk loading apparatus with a chucking member fixed in position and a motor with a disk table raised to clamp the disk between chucking member and disk table. For raising and lowering the motor, supporting pins are guided along two elongated openings in sliding members of an elevating mechanism. These sliding members are moved according to the form of a cam groove in which a pin of the elevating mechanism is inserted. The cam disk or rotation operation member is also in engagement with an idle gear and a tilt operating cam member. The last one is used for tilting an optical pickup head that is raised and lowered together with the motor and is only in engagement with the cam groove of a cam member with its engagement lever in the raised position of the motor.

In view of the prior art it is an object of the invention to improve the assembly in structure of a laser disk player so that a less number of assembly processing steps is required and the production costs are decreased, whereby simultaneously the fabrication of parts of the assembly is simplified.

This object is solved by the features of claim 1. Advantageous embodiments of the invention are disclosed by the dependant claims.

According to the present invention, there is provided a laser disk player as defined in claim 1.

### BRIEF DESCRIPTION OF THE DRAWINGS

Fig. 1 is a partial top view of a laser disk player according to the present invention, representing a part of an unloading state;
Fig. 2 is a sectional side view of the laser disk player according to the present Invention;
Fig. 3 is a partial cross-sectional view of the laser disk player according to the present invention;
Fig. 4 is a partial top view of the laser disk player according to the present invention, representing a part of a loading state;
Fig. 5 is a partial perspective view of the laser disk player according to the present invention, representing an assembled state of a chucking apparatus;
Fig. 6 is a partial perspective view of the laser disk player according to the present invention, representing an assembled state of a lever;
Figs. 7A and 7B show respectively top and cross-sectional views of a chucking apparatus of the laser disk player according to the present invention;
Fig. 8 is a top view of the laser disk player according to the present invention, representing an assembled state of a deck and an optical apparatus;
Figs. 9A and 9B show respectively top and bottom views of the first tray gear of the laser disk player according to the present invention;
Figs. 10A, 10B and 10C show respectively top, bottom and cross-sectional views of a rotary member of the laser disk player according to the present invention;
Fig. 11 is a top view of a lever of the laser disk player of the present invention; and
Figs. 12A and 12B show respectively perspective and cross-sectional views of a tilt gear of the laser disk player of the present invention.

### DETAILED DESCRIPTION OF THE PREFERRED EMBODIMENT

The present invention will now be described in more detail with reference to accompanying drawings.

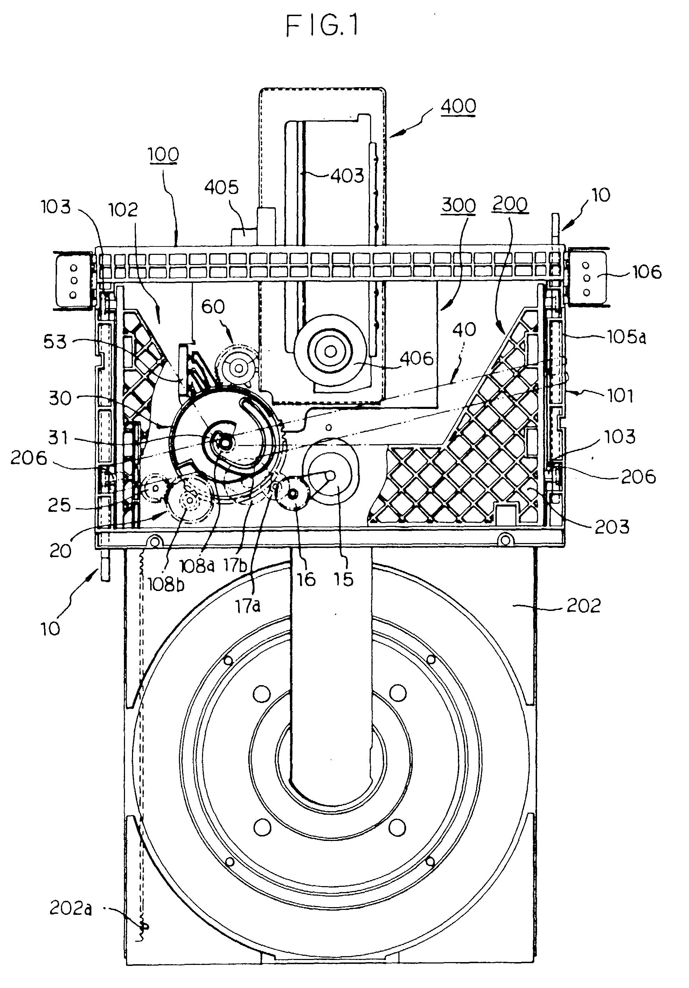

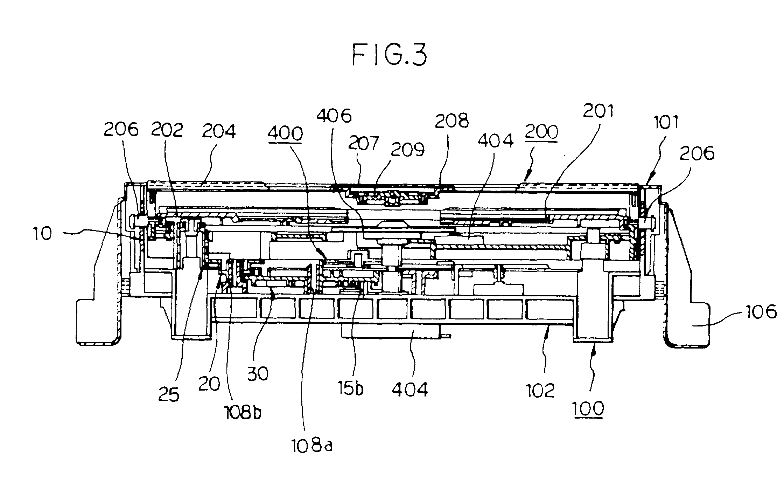

Figs. 1 to 4 show each part of a laser disk player according to the present invention.

A chucking apparatus 200 for performing chucking operations of a disk tray 202 is mounted on a chassis 100 and a deck 300 is positioned under the chucking apparatus. On the deck 300, an optical apparatus is mounted for playing back informations recorded in a disk 201 using an optical pickup. In the chassis 100, a body consisting of a side frame 101 and a lower frame 102 is formed by injection molding. At the side frame 101, many insertion slots 103 are formed and, below these insertion slots, guidings 105a and 105b along a guiding side surface 104 are formed. At both sides of the side frame 101, a bracket 106 is fixed. Many underpinning pieces 107 are formed at the upper side of the lower frame 102 and bosses 108a and 108b are formed at the center of the lower frame 102. Also, a side plate 10 is inserted into the guidings formed at the side frame 101. A plurality of guiding slots 11 are formed at the side plate 10. At the end of the guiding slots 11, an assembly slot 12 is formed and connected to the upper side of the guiding slots 11. Along the edges of the guiding slots 11, guiding ribs 13 are protruding. A linking hole 14 is formed at the lower side of the side plate 10.

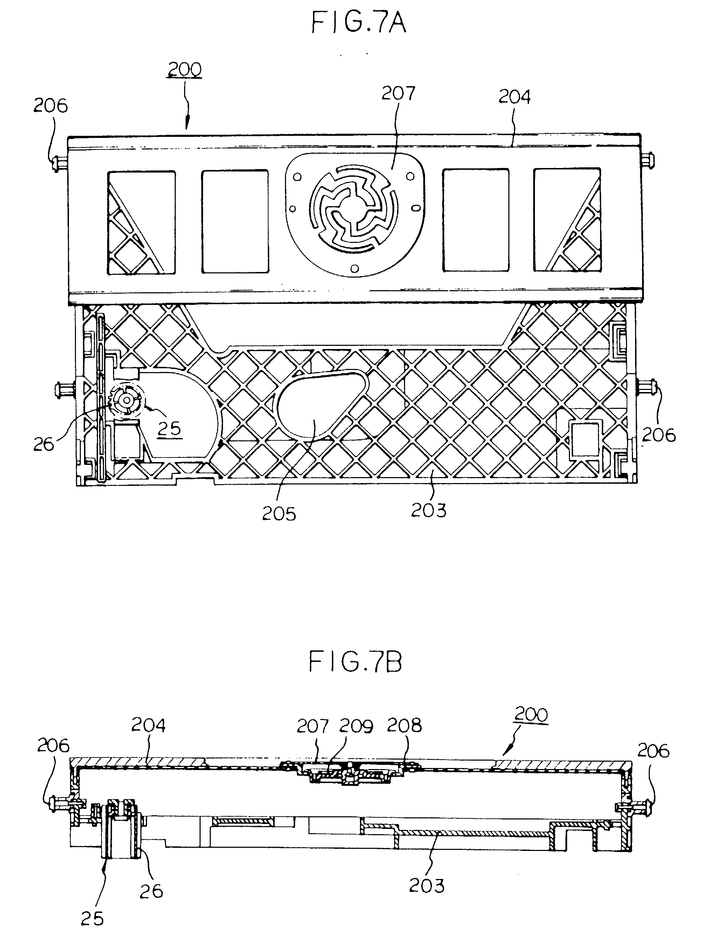

On the other hand, the chucking apparatus 200 shown in Figs. 7A and 7B comprises a bracket tray 203 to which a disk tray 202 which can load a disk of 80, 120, 200 or 300mm in diameter is mounted. A plate 204 is assembled on the bracket tray 203. At both sides of the bracket tray 203, guiding axes 206 are formed. The bracket tray 203 also has an opening 205. The guiding axes 206 are inserted into both the insertion slot 103 of the chassis 100 and the guiding slots 11 of the side plate 10 through the assembly slot 12 of the side plate 10. A spring 207 fixed by a holder 208 is mounted at the center of the plate 204. Also, a clamp 209 is mounted at the holder 208 to press the disk 201.

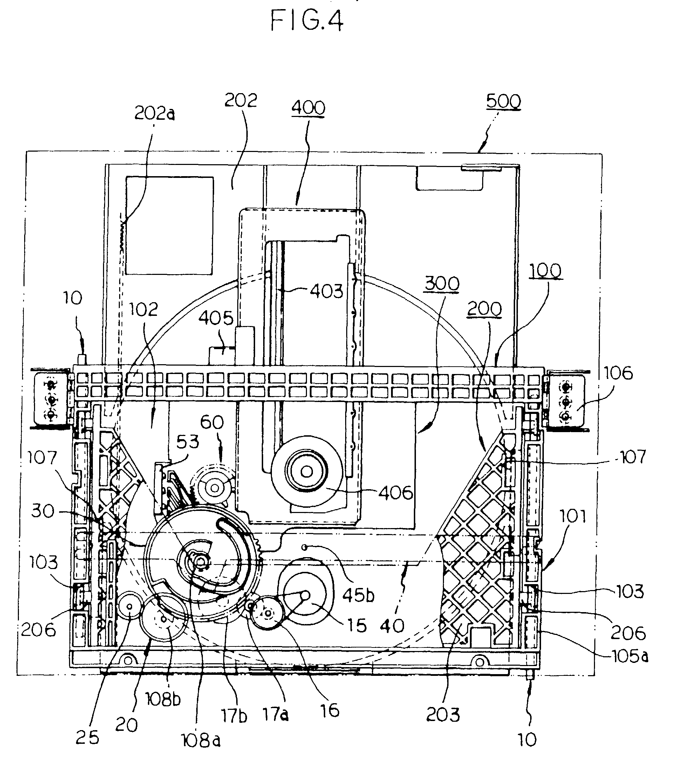

Since the chucking apparatus 200 can be mounted on the side frame 101 of the chassis 100 after assembling the bracket tray 203 and the plate 204 in individual processes, it is easy to manage assembling parts and thus the efficiency of assembly is improved. At a predetermined portion of the chassis 100 in Fig. 1 the rotary member 30 is mounted receiving the rotary power of the main motor 15 by a pulley 16 and gears 17A, 17B being engaged with each other. The rotary power of the rotary member 30 is transferred to the first and second tray gears 20 and 25, the second tray gear 25 being mounted below the bracket tray 203, a gear part 26 of the second tray gear 25 being engaged with a rack part 202A formed at the disk tray 202 (Fig. 4).

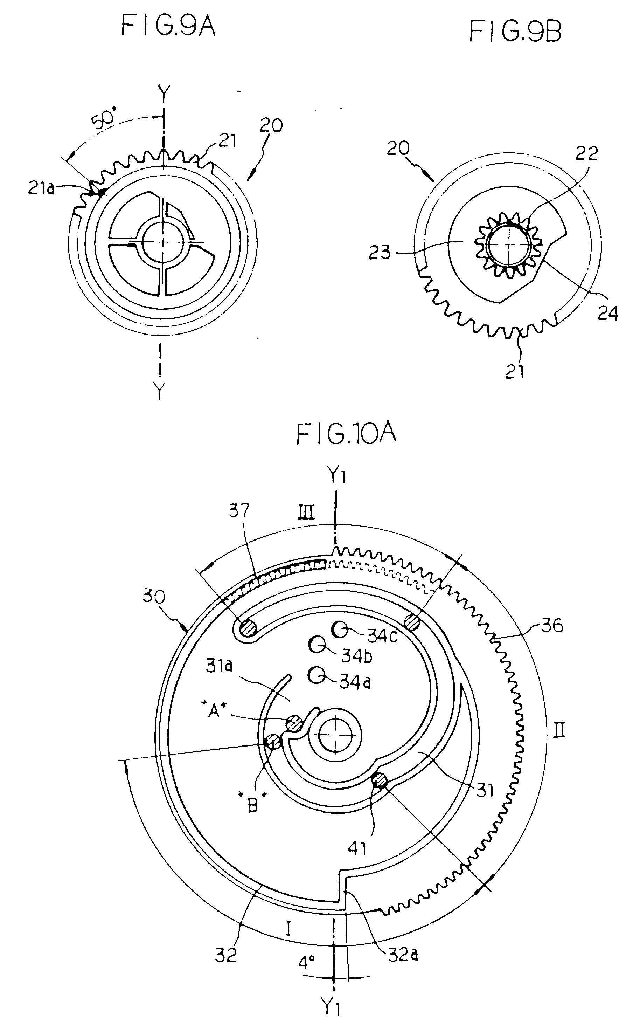

As shown in Figs. 9A and 9B, first and second gear parts 21 and 22 are formed at the exterior border of upper and lower parts of tray gear 20 and a boss part 23 is formed between the upper and lower parts. At a part of the boss part 23, a triangular type mark 21a is formed at a predetermined part shown in the figures on the left of the first gear part 21 that is apart from Y-Y axis by an angle of 50°. The first gear part 21 of the first tray gear 20 is engaged with the gear part 26 of the second tray gear 25 (Fig. 7A, B). The Y-Y axis is defined as an axis parallel to an Y1-Y1 axis, see below, when rotary member 30 and first tray gear 20 are initially installed on the deck.

As shown in Figs. 10A to 10C, a cam slot 31 divided into a moving section I, a chucking section II and a tilting section III, is formed at the upper side of the rotary member 30. At one end of the cam slot 31, a wide space part 31a is formed. A rib 32 with a bending part 32a is formed at a predetermined part of the exterior border of the cam slots 31 apart from Y1-Y1 axis by an angle of about 4°. The Y1-Y1 axis is defined as an axis extending through the center of rotary member 30 and a first tooth of second gear part 36. First, second, and third cam slots 33a, 33b, and 33c with assembling holes 34a, 34b, and 34c, respectively, are formed at the lower side of the rotary member 30. A first gear part 35 is formed at the exterior border of the third cam slot 33c to be engaged with the gear 17b. Subsequently, the second and third gear parts 36 and 37 are formed at the exterior border of the rotary member 30. The second gear part 36 of the rotary member 30 is engaged with the second gear part 22 of the first tray gear 20 (Fig 4,9 B). A guiding pin 41 of a lever 40 is inserted into the cam slot 31.

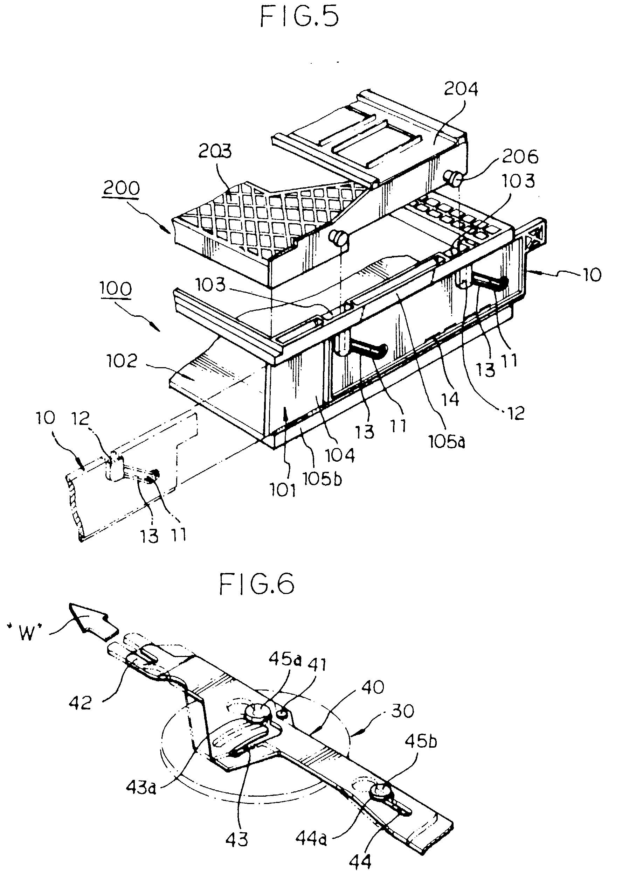

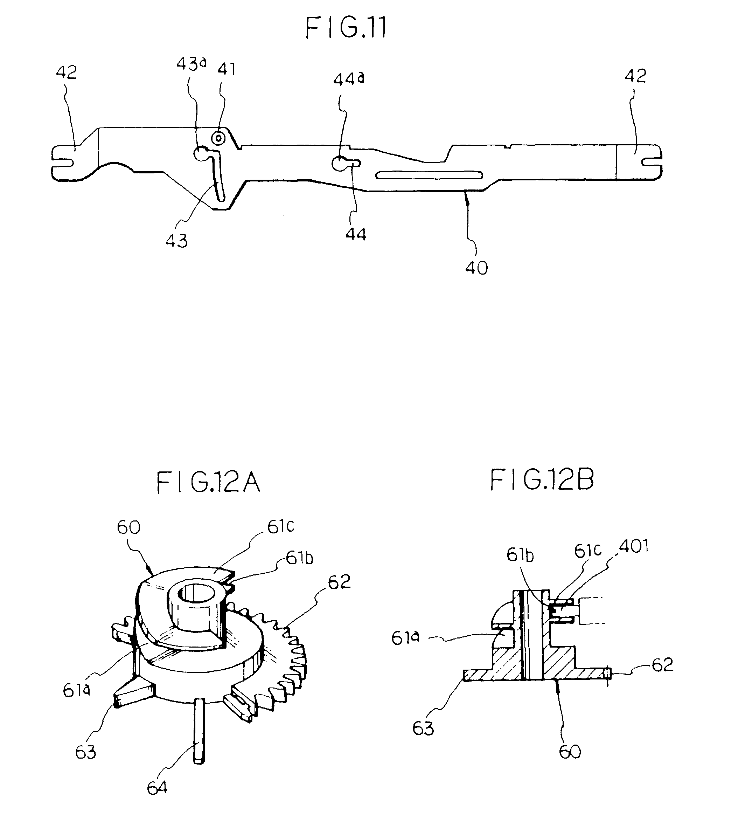

As shown in Fig. 11, sliding parts 42 are formed at both ends of the lever 40 so that they are linked with linking holes 14 of the side plates 10. Long slots 43 and 44 are formed at predetermined parts of the lever 40. To these long slots 43 and 44, assembling holes 43a and 44a are connected so that the lever 40 can easily be assembled to or separated from fixing pins 45a and 45b (Fig. 6).

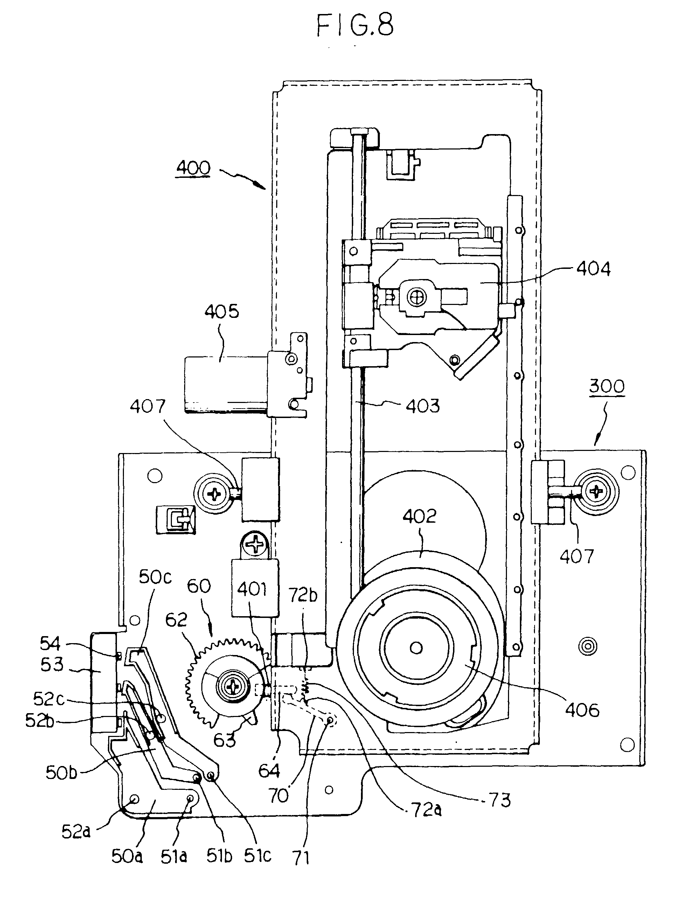

Also, guiding pins 51a, 51b, and 51c formed at switching levers 50a, 50b, and 50c are inserted into the first, second, and third cam slots 33a, 33b, and 33c, respectively (Fig. 8). At the center parts of the switching lever 50a, 50b, and 50c, fixing pins 52a, 52b, and 52c are respectively formed, so that they can freely rotate on deck 300. The other ends of the switching levers 50a, 50b, and 50c are in contact with the buttons 54 of the mode switch 53 mounted on the deck 300, performing ON/OFF operation.

As shown in Figs. 12A and 12B, a tilt gear 60 comprises tilting slots 61a, 61b, and 61c connected to each other in a spiral form. A gear part 62 of the tilting gear is engaged with the third gear part 37 of the rotary member 30. A supporting piece 63 and a radially extending pin 64 are formed between the gear part 62 of the tilt gear 60, wherein the supporting piece 63 is in contact with the exterior border of the rotary member 30, while pin 64 is in contact with one end of a lever 70 (Fig. 4,8).

Also, the lever 70 is mounted on the deck 300 so as to be pivoted around the fixing pin 71. A fastening piece 72a is formed at one end of the lever to fix one end of a spring 73 and the other end of the spring 73 is fixed to another fastening piece 72b on the deck 300, allowing the elastic force to the tilt gear 60. An operating piece 401 (Fig. 8) formed at one side of the optical apparatus 400 is inserted into one of the first, second, and third tilting slots 61, 61b, and 61c of the tilt gear 60.

As shown in Fig. 8, a feeding motor 405 for driving the optical pickup 404 by a spindle motor 402 and a guiding axis 403, is mounted on the optical apparatus 400. Also, a turn-table 406 is mounted on the spindle motor 402 to safely load the disk 201. In order to detect a distance between the disk 201 and the optical pickup 404, a sensor ( not shown) is also provided at the predetermined position of the optical apparatus 400. This optical apparatus 400 is mounted at the deck 300 so as to be freely tilted around a fixing axis 407.

Now, the present invention is explained in detail in its sequence of steps for assembling major parts of the laser disk player.

The deck 300 provided with the optical apparatus 400 is mounted at the upper face of the lower frame 102 of the chassis 100, while the rotary member 30 is mounted at the boss 108a of the lower frame 102. The side plate 10 is mounted to the guiding side 104 formed at the side frame 101 of the chassis 100.

At this time, as shown in Fig. 5, the assembling slot 12 connected to the guiding slot 11 of the side plate 10 must agree with the insertion slot 103 of the side frame 101. Also, when the rotary member 30 is mounted at the upper surface of the chassis 100, the rotary member 30 is joined with the boss 108a after the assembling holes 34a, 34b, and 34c formed at the first, second, and third cam slots 33a, 33b, and 33c of the rotary member 30 agree well with the guiding pins 51a, 51b, and 51c of the switching levers 50a, 50b, and 50c formed on the deck 300. By such a method, the guiding pins 51a, 51b, and 51c of the switching levers 50a, 50b, and 50c, can accurately be inserted into the first, second, and third cam slots 33a, 33b, and 33c of the rotary member 30. After the boss part 23 of the first tray gear 20 is mounted at the boss 108b of the lower frame 102 so as to be in contact with the exterior border of the rotary member 30, the second gear part 22 of the first tray gear 20 is engaged with the second gear part 36 of the rotary member 30.

At this time, after the mark 21a formed at the upper face of the first gear part 21 of the first tray gear 20 is accurately positioned at the bending part 32a of rib 32 formed at the upper face of the rotary member 30, the fixing pin 45a is assembled with the boss 108a of the lower frame 102.

On the other hand, a sequence of steps for assembling the lever 40 to operate the side plate 10, is shown in Fig. 6.

After pushing the assembling holes 43a and 44a of the lever 40 on the fixing pins 45a and 45b of the lower frame 102 respectively, the lever 40 is pulled in a direction of arrow "W" as shown in Fig. 6. Then, the fixing pins 45a and 45b are guided to the long slots 43 and 44 connected to the assembling holes 43a and 44a.

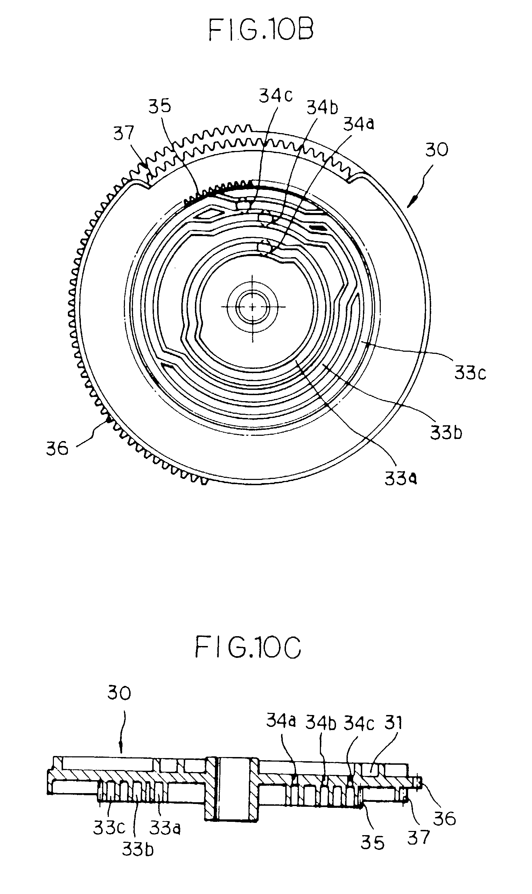

Since the guiding pin 41 of the lever 40 is positioned at the space part 32 ( "A" in Fig. 10) connected to the cam slot 31 of the rotary member 30 as shown in Fig. 10A, the lever can be moved easily, thereby making the assembling process easier. The sliding part 42 of the lever 40 is linked with linking hole 14 of the side plate 10.

After inserting the guiding axis 206 formed at the bracket tray 203 of the chucking apparatus 200 into both the insertion slots 103 formed at the side frame 101 of the chassis 100 and the guiding slots 11 formed at the side plate 10, the rotary power is applied to the pulley 16 from the external through the opening 205 of the bracket tray 203. Then, the rotary member 30 is rotated by the gears 17a and 17b and the guiding pin 41 of the lever 40 is positioned at the starting point ( "B" in Fig. 10 ) of the cam slot 31 according to the rotation of the rotary member 30. Here, the lever 40 moves the side plate 10 on the guiding side 104 of the side frame 101. Then, the guiding axis 206 of the bracket tray 203 is hung to the guiding slot 11 of the side plate 10, so as not to break away from the insertion slot 103 of the side frame 101.

At this time, the state in that the guiding pin 41 of the lever 40 is positioned at the starting point of the cam slot 31 formed at the rotary member 30 is the unloading state of the laser disk player in which the rotation of the rotary member 30 is limited or completed by the operation of the mode switch 53 according to the switching levers 51a, 50b, and 50c. Thus, the disassembling of the chucking apparatus 200 and the lever 40 is possible only when the guiding pin 41 is positioned at the empty part 31a of the cam slot 31 by applying the rotary power to the pulley 16 in contrary to the assembling process.

Accordingly, each part of the laser disk player can easily be mounted to or separated from the chassis 100. Also, since the chucking apparatus 200 and as shown in Fig. 1, if the disk tray is pushed by the external mode switch or the external physical force after loading the disk 201 on the disk tray 202, the main motor 15 connected to a limit switch ( not shown ) is rotated, transferring the rotary power to the pulley 16 and the gears 17a and 17b. Then, the rotary member 30 is also rotated. At this time, the rotary power of the rotary member 30 is transferred to the first and second tray gears 20 and 25 and then the disk tray 202, of which the rack part 202a is engaged with the gear part 26, is loaded by the transferred rotary power of the second tray gear 25. This loading operation is performed by the guiding pin 41 of the lever 40 in the loading section I formed at the rotary member 30.

As shown in Fig. 4, by the continuous rotation of the rotary member 30, the guiding pin 41 of the lever 40 is guided to the chucking section II of the cam slot 40. thus, the long slots 43 and 44 of the lever 40 are guided by the fixing pins 45a and 45b, respectively, and the sliding part 42 of the lever 40 is guided according to the underpinning piece 107 formed at the lower frame 102 of the chassis 100, moving the side plate 10 in direction to the guiding side 104 of the side frame 101. The side plate 10 is guided by the guiding 105a and 105b of the side frame 101. Also, the guiding slot 11 of the side plate 10 guides the guiding axis 206 of the bracket tray 203 to the insertion slot 103 of the side frame 101 according to the guiding rib 13, moving the chucking apparatus 200 downward.

The gear part 26 of the second tray gear 25 mounted at the lower face of the bracket tray 203 is rotated according to the first gear part 21 of the first tray gear 20 and the rack part 202a of the disk tray 202 is guided according to the gear part 26 of the second tray gear 25, being moved downward. At this time, the second gear part 22 of the first tray gear 20 is disjointed from the second gear part 36 of the rotary member 30 and the locking face 23 is in contact with the outside of the rotary member 30.

Since the chucking apparatus 200 is moved downward, the clamp 209 presses the upper face of the disk 201 to chuck the disk 20 on the turn-table 406 of the motor 402. Also, the clamp 209 prevents the slip of the disk 201 by the elastic force of the plate spring 207. The rotary member 30 guides the guiding pins 51a, 51b, and 51c of the switching levers 50am 50b, and 50c inserted into the first, second, and third cam slots 33a, 33b, and 33c, according to each operation state. The switching levers 50a, 50b, and 50c are moved, centered on the fixing pins 52a, 52b, and 52c to press the buttons 54 of the mode switch 53. Then, the buttons are turned on or off. Thus, ON or OFF signal is transferred to the driving devices ( not shown ), stopping the main motor 15.

Subsequently, the spindle motor 402 of the optical apparatus 400 rotates the disk 201 and the feeding motor 405 moves the optical pickup 404 according to the guiding axis 403 to play back the informations recorded in the disk. Here, the sensor of the optical apparatus 400 detects a distance between the disk 201 and the optical pickup 404 to rotate the electrically connected main motor 15. Then, the main motor 15 transfers the rotary power sequentially to the pulley 16 and the gears 17a and 17b, thereby rotating the rotary member 30.

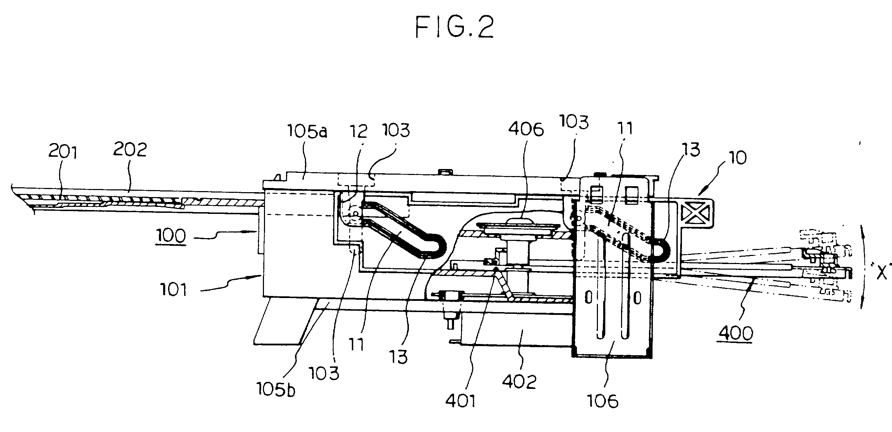

According to the rotation of the rotary member 30, the supporting piece 63 is in contact with the outside of the rotary member 30 and the gear part 62 of the tilt gear 60 is engaged with the third gear part 37 of the rotary member 30 by the moving force of the lever 70. That is, the lever 70 tends to move by the elastic force of the third gear part 37, centered on the fixing pin 71, and this force is transferred to the tilt gear 60 through the pin 64. Thus, the guiding pin 41 of the lever 40 is guided within the tilting section III of the cam slot 31 formed at the rotary member 30 and the tilt gear 60 is rotated by the rotary member 30, guiding the protrusion 401 of the optical apparatus 400 along the first, second, and third tilting slots 61a, 61b, and 61c. Then, the optical apparatus 400 is tilted along the direction of the tilt gear 60 ( direction "X" in Fig. 2 ) and thus the distance between the disk 201 and the optical pickup 404 is kept constant.

On the other hand, if any external mode is selected to convert the mode during the playback of the information in the disk 201, the main motor 15 is rotated by the driving device, rotating the rotary member 30. Then, the disk tray 202 is moved down by the rotary member 30 and returns to original position to protect the disk 201.

In the case of picking out the disk 201 from the disk tray 202 after completing the playback of the disk 201, the ejecting mode is again selected to rotate the main motor in an opposite direction to the loading operation. Then, the rotary member 30 is rotated in a direction to the tilting and chucking operations and thus each part enters unloading state.

As described hereinabove, the laser disk player according to the present invention sequentially performs the loading, chucking and tilting operation of the disk tray by using the main motor. Also, each part is easily mounted to or separated from a chassis, simplifying the manufacturing process. Accordingly, the productivity is improved and the manufacturing expense is decreased. Furthermore, the feature and size of the case can easily be varied, making a variety of products.

## Claims

1. A laser disk player for playing back informations recorded on a disk (201) by using an optical pick up apparatus (400), comprising
- a chucking apparatus (200) movably mounted on a chassis (100) of the laser disk player between a raised position for inserting said disk (201) and a lower position in which said disk is chucked between a clamp (209) of the chucking apparatus (200) and a turn-table (406) mounted on a motor (402);
- a cam disk (30) rotatably supported on said chassis (100) and driven by a main motor (15) which cam disk (30) is in meshing engagement with a first and a second tray gear (20, 25) for retracting a disk tray (202) from a loading position to a play back position, and vice versa, said disk tray (202) and a bracket tray (203) being parts of said chucking apparatus (200);
- a lever (40) movable with respect to a lower frame (102) of the chassis (100) by engagement with a cam member (31) of said cam disk (30), said lever (40) having sliding end parts (42) each being in engagement with a side plate (10) guided along a side frame (101) of said chassis (100), said side plates (10) supporting said bracket tray (203) of said chucking apparatus (200) and providing a guiding means (13) for lowering and raising said chucking apparatus (200) together with said disk tray (202) in co-operation with said side frame (101), and
- a tilt gear (60) rotatably supported on a deck (300) of the player that is engageable with a gear part (37) of said cam disk (30) and having a helical part that is in engagement with an operating piece (401) of said optical pick up apparatus (400) for tilting same about an axis (407) by rotation of said tilt gear (60) by which axis (407) the optical pick up apparatus is pivotally supported on said deck (300), the cam disk (30) having three parts for respectively moving the disk tray (202), raising and lowering the chucking apparatus (200), and rotating the tilt gear (60).

2. The laser disk player according to claim 1, wherein an insertion slot (103) having one open end is formed at the side frame (101) of said chassis (100), the side plate (10) with a guiding slot (11) is mounted at a guiding side (104) of the side frame (101), an assembling slot (12) is formed at one end of said guiding slot (11) of said side plate, and a guiding axis (206) of said bracket tray (203) is guided along said assembling slot (12) so as to be assembled with said guiding slot of said chassis (100) and said side plate (10).

3. The laser disk player according to claim 2, wherein a guiding rib (13) is formed at the exterior border of said guiding slot (11) of said side plate (10).

4. The laser disk player according to claim 1 or 2, wherein a plate spring (207) is fixed at the center of said plate (204) by a holder (208), and a clamp (209) is mounted at said holder to press the disk.

5. The laser disk player according to claims 1-4, wherein an opening (205) is formed at the center of said bracket tray (203) to rotate a pulley (16).

6. The laser disk player according to claim 1, wherein a first gear part (21) and a second gear part (22) are formed at the exterior border of upper and lower face of said first tray gear (20) with a boss part (23) having a locking face of three step facets formed between said first and second gear parts (21, 22).

7. The laser disk player according to claim 6, wherein a mark (21a) is formed at the upper face of said first gear part (21) of said tray gear (20), apart from a Y-Y axis by a predetermined angle.

8. The laser disk player according to claim 1 or 2, wherein said cam member is a cam slot (31) formed at the upper face of said cam disk (30) to differentiate a moving section (I), a chucking section (II) of the disk tray (202), and a tilting section (III) of the optical apparatus (400), and first, second and third cam slots (33a, b, c) are formed at the lower face of said cam disk, wherein a guiding pin (41) of said lever (40) is guided along the cam slot (31) and guiding pins (51a, b, c) of switching levers (50a, b, c) are guided along first, second, and third cam slots (33a, b, c).

9. The laser disk player according to claim 8, wherein a first gear part (35) is formed at the exterior border of said third cam slot (33c) and second and third gear parts (36, 37) are formed at the exterior border of said cam disk (30), wherein said first, second and third gear parts (35, 36, 37) are engageable with a gear (17a, 17b) for transferring rotary power from pulley (16), said tray gear (20), and said tilt gear (60), respectively.

10. The laser disk player according to claim 8, wherein a wider space part (31a) is formed at the one end of said cam slot (31) in said rotary member (30).

11. The laser disk player according to claim 8, wherein a rib (32) having a bending part (32a) at a predetermined position apart from Y-Y axis is formed at the exterior border of said cam slot (31) in said cam disk (30).

12. The laser disk player according to claim 8, wherein assembling holes (34a, b, c) are respectively formed in said first, second and third cam slots (33a, b, c) so that said guiding pins (51a, b, c) of said switching levers (50a, b, c) are inserted therein.

13. The laser disk player according to claim 12, wherein said guiding pins (51a, b, c) are formed at the center of said switching levers (50a, b, c) so that they are freely moved on said deck (300), being in contact with the button (54) of the mode switch (53) to perform ON/OFF operation.

14. The laser disk player according to claim 1, wherein said sliding end parts (42) are formed with a predetermined tilt angle at both ends of said lever (40) and assembling holes (43a, 44a) connected with long slots (43, 44) are formed at predetermined positions of said lever so that said assembling holes can easily be assembled with or separated from fixing pins (45a, b).

15. The laser disk player according to claim 1, wherein first, second and third tilting slots (61a, b, c) are formed in a spiral form at the upper side of said tilting gear (60) and a gear part (62) for engagement with third gear part (37) of said cam disk (30) is formed at the exterior border of the lower face of said tilting gear.

16. The laser disk player according to claim 15, wherein a supporting piece (63) and a radially extending pin (64) for engagement with an exterior border of said cam disk (30) and with one end of a lever (70), respectively, are respectively formed at the gear part (62) of said tilting gear (60).

17. The laser disk player according to claim 16, wherein said lever (70) is mounted on said deck (300) to be rotated and centered on a fixing pin (71) formed at the lower face and one end of a spring (73) is fixed to a fixing piece (72a) formed at one end.

## Patentansprüche

1. Laser-Plattenwiedergabegerät zur Wiedergabe von auf einer Disk (201) aufgezeichneten Informationen unter Verwendung eines optischen Aufnahmegerätes (400) mit:
- einer Spanneinrichtung (200), die auf einem Chassis (100) des Laser-Plattenwiedergabegerätes beweglich zwischen einer angehobenen Stellung zum Einlegen der Disk (201) und einer niedngen Position beweglich ist, in welcher die Disk zwischen einer Klemmeinrichtung (209) der Spannvorrichtung (200) und einem Drehtisch (406) eingeklemmt ist, welcher an einem Motor (402) montiert ist;
- einer Nockenscheibe (30), die auf dem Chassis (100) drehbar gelagert und durch einen Hauptmotor (15) angetrieben ist, welche Nockenscheibe (30) in Eingriff mit einem ersten und einem zweiten Tischzahnrad (20, 25) zum Zurückziehen eines Diskablegetisches (202) von einer Ladestellung zu einer Wiedergabestellung und umgekehrt ist, wobei der Diskablegetisch und ein Haltetisch (203) Teile der Klemmvorrichtung (200) sind;
- einem Hebel (40), der bezüglich eines unteren Rahmens (102) des Chassis (100) durch Eingriff mit einem Nockenteil (31) der Nockenscheibe (30) bewegbar ist, wobei der Hebel (40) gleitende Endteile (42) aufweist, die in Eingriff mit einer Seitenplatte (10) sind, welche entlang eines Seitenrahmens (101) des Chassis (100) geührt ist, wobei die Seitenplatten (10) den Haltetisch (203) der Klemmvorrichtung (200) tragen und eine Führungseinrichtung (13) zum Absenken und Abheben der Klemmvorrichtung (200) zusammen mit dem Diskablegetisch (202) in Kooperation mit dem Seitenrahmen (101) bereitstellen, und
- einem Schwenkzahnrad (60), welches drehbar auf einem Deck (300) des Geräts gelagert ist und mit einem Zahnradteil (37) der Nockenscheibe (30) in Eingriff bringbar ist und welches einen spiralförmigen Teil in Eingriff mit einem Betätigungsteil (401) des optischen Wiedergabegerätes (400) zum Verschwenken desselben um eine Achse (407) durch Drehen des Schwenkzahnrades (60) aufweist, durch welche Achse (407) das optische Wiedergabegerät verschwenkbar auf dem Deck (300) gelagert ist, wobei die Nokkenscheibe (30) drei Teile zur entsprechenden Bewegung des Disktisches (202), zum Anheben und Absenken der Klemmvorrichtung (200) und zum Drehen des Schwenkzahnrades (60) aufweist.

2. Laser-Plattenwiedergabegerät nach Anspruch 1,
**dadurch gekennzeichnet,**
daß ein Eingabeschlitz (103) mit einem offenen Ende am Seitenrahmen (101) des Chassis (100) gebildet ist, die Seitenplatte (10) mit einem Führungsschlitz (11) an einer Führungsseite (104) des Seitenrahmen (101) angebracht ist, ein Zusammenbauschlitz (12) an einem Ende des Führungsschlitzes (11) der Seitenplatte gebildet ist und eine Führungsachse (206) des Haltetisches (203) entlang des Zusammenbauschlitzes (12) so geführt ist, daß sie mit dem Führungsschlitz im Chassis (100) und der Seitenplatte (10) zusammenbaubar ist.

3. Laser-Plattenwiedergabegerät nach Anspruch 2,
**dadurch gekennzeichnet,**
daß eine Führungsrippe (13) an der äußeren Begrenzung des Führungsschlitzes (11) der Seitenplatte (10) ausgebildet ist.

4. Laser-Plattenwiedergabegerät nach Anspruch 1 oder 2,
**dadurch gekennzeichnet,**
daß eine Plattenfeder (207) in der Mitte der Platte (204) durch einen Halter (208) befestigt ist und eine Klemme (209) an dem Halter zum Drücken der Disk montiert ist.

5. Laser-Plattenwiedergabegerät nach Ansprüchen 1 bis 4,
**dadurch gekennzeichnet,**
daß eine Öffnung (205) im Zentrum des Haltetisches (203) zum Drehen einer Riemenscheibe (16) ausgebildet ist.

6. Laser-Plattenwiedergabegerät nach Anspruch 1,
**dadurch gekennzeichnet,**
daß ein erster Zahnradteil (21) und ein zweiter Zahnradteil (22) an der äußeren Begrenzung der oberen und unteren Seite des ersten Tischzahnrades (20) ausgebildet sind mit einem Nabenteil (23) mit einer Verschließseite mit drei abgestuften Abschrägungen, welche zwischen dem ersten und zweiten Zahnradteil (21, 22) ausgebildet ist.

7. Laser-Plattenwiedergabegerät nach Anspruch 6,
**dadurch gekennzeichnet,**
daß eine Markierung (21a) auf der Oberseite des ersten Zahnradteils (21) des Tischzahnrades (20) ausgebildet ist, die von einer Y-Y Achse um einen vorbestimmten Winkel beabstandet ist.

8. Laser-Plattenwiedergabegerät nach Anspruch 1 oder 2,
**dadurch gekennzeichnet,**
daß das Nockenteil ein Nockenschlitz (31) ist, der in der Oberseite der Nockenscheibe (30) ausgebildet ist, um einen Bewegungsabschnitt (I), einen Klemmabschnitt (II) des Disktisches (202), und einen Schwenkabschnitt (III) des optischen Geräts zu unterscheiden, und erste, zweite und dritte Nockenschlitze (33a, b, c) auf der Unterseite der Nokkenscheibe gebildet sind, wobei ein Führungsstift (41) des Hebels (40) entlang des Nokkenschlitzes (31) und Führungsstifte (51a, b, c) von Schalthebeln (50a, b, c) entlang des ersten, zweiten und dritten Nockenschlitzes (33a, b, c) geführt sind.

9. Laser-Plattenwiedergabegerät nach Anspruch 8,
**dadurch gekennzeichnet,**
daß ein erster Zahnradteil (35) an der Außenseite des dritten Nockenschlitzes (33c) und zweite und dritte Zahnradteile (36, 37) an der Außenseite der Nockenscheiben (30) gebildet sind, wobei erster, zweiter und dritter Zahnradteil (35, 36, 37) in Eingriff mit einem Zahnrad (17a, 17b) bringbar sind, um Drehantriebskraft von Riemenscheibe (16), dem Tischzahnrad (20) und dem Neigungszahnrad (60) entsprechend zu übertragen.

10. Laser-Plattenwiedergabegerät nach Anspruch 8,
**dadurch gekennzeichnet,**
ein breiterer Freiraum (31a) an einem Ende des Nockenschlitzes (31) in dem Drehteil (30) ausgebildet ist.

11. Laser-Plattenwiedergabegerät nach Anspruch 8,
**dadurch gekennzeichnet,**
daß eine Rippe (32) mit einem gekrümmten Teil (32a) an einer vorbestimmten Stelle entfernt von der Y-Y Achse an der Außenseite des Nockenschlitzes (31) in der Nockenscheibe (30) gebildet ist.

12. Laser-Plattenwiedergabegerät nach Anspruch 8,
**dadurch gekennzeichnet,**
daß Zusammenbauöffnungen (34a, b, c) entsprechend im ersten, zweiten und dritten Nockenschlitz (33a, b, c) so gebildet sind, daß die Führungsstifte (51a, b, c) der Schalthebel (50a, b, c) darin einsetzbar sind.

13. Laser-Plattenwiedergabegerät nach Anspruch 12,
**dadurch gekennzeichnet,**
daß die Führungsstifte (51a, b, c) in einer Mitte der Schalthebel (50a, b, c) so gebildet sind, daß sie frei auf dem Deck (300) bewegbar sind, wenn sie in Kontakt mit einem Knopf (54) eines Modusschalters (53) stehen, um eine Ein-/Aus-Tätigkeit durchzuführen.

14. Laser-Plattenwiedergabegerät nach Anspruch 1,
**dadurch gekennzeichnet,**
daß Gleitendstücke (42) mit einem vorbestimmten Neigungswinkel an beiden Enden des Hebels (40) gebildet sind und Zusammenbauöffnungen (43a, 44a), die mit den Langlöchern (43, 44) in Verbindung sind, an vorbestimmten Positionen des Hebels gebildet sind, so daß die Zusammenbauöffnungen einfach mit den Befestigungsstiften (45a, b) zusammensetzbar oder von diesen trennbar sind.

15. Laser-Plattenwiedergabegerät nach Anspruch 1,
**dadurch gekennzeichnet,**
daß erster, zweiter und dritter Neigungsschlitz (61a, b, c) in spiraliger Form an der Oberseite des Schwenkzahnrades (60) ausgebildet sind und ein Zahnradteil (62) zum Eingriff mit dem dritten Zahnradteil (37) der Nockenscheibe (30) an der Außenseite der Unterseite des Neigungszahnrades gebildet ist.

16. Laser-Plattenwiedergabegerät nach Anspruch 15,
**dadurch gekennzeichnet,**
daß ein Abstützteil (63) und ein radial vorstehender Stift (64) entsprechend zum Angriff an einer Außenseite der Nockenscheibe (30) und mit einem Ende eines Hebels (70) entsprechend am Zahnradteil (62) des Schwenkzahnrades (60) gebildet sind.

17. Laser-Plattenwiedergabegerät nach Anspruch 16,
**dadurch gekennzeichnet,**
daß der Hebel (70) an dem Deck (300) zur Drehung und Zentrierung auf einem Befestigungsstift (71) montiert ist, welcher an der Unterseite und an einem Ende einer Feder (73) gebildet ist, die an einem Befestigungsstück (72a), das an einem Ende gebildet ist, befestigt ist.

## Revendications

1. Un lecteur de disque laser destiné à relire des informations enregistrées sur un disque (201) par utilisation d'un appareil d'enregistrement optique (400) comprenant
- un dispositif de serrage (200), monté de façon mobile sur un châssis (100) du lecteur de disque laser entre une position levée destinée à l'insertion dudit disque (201) et une position abaissée dans laquelle ledit disque est serré entre une griffe (209) appartenant au dispositif de serrage (200) et une table tournante (406) montée sur un moteur (402);
- un disque de came (30), monté à rotation sur ledit châssis (100) et entraîné par un moteur principal (15), le disque de came (30) étant pris par engrènement avec une première et une deuxième roue dentée de plateau (20, 25) en vue de rétracter un plateau à disque (202) d'une position de chargement vers une position de relecture et vice-versa, ledit disque de plateau (202) et ledit disque de console (203) faisant partie dudit dispositif de serrage (200);
- un levier (40) déplaçable par rapport à un cadre inférieur (102) du châssis (100), par mise en prise avec un organe formant came (30) appartenant audit disque de came (30), ledit levier (40) ayant des parties d'extrémité coulissantes (42), chacune étant en prise avec une plaque latérale (10) guidée sur un cadre latéral (101) dudit châssis (100), lesdites plaques latérales (10) supportant ledit plateau de console (203) dudit dispositif de serrage (200) et fournissant des moyens de guidage (13) pour l'abaissement et la levée dudit dispositif de serrage (200), conjointement avec ledit plateau de disque (202), en coopération avec ledit cadre latéral (101), et
- une roue dentée de basculement (60), montée à rotation sur une plate-forme (300) du lecteur, susceptible d'être mise en prise avec une partie dentée (37) du disque de came (30) et ayant une partie hélicoïdale mise en contact avec une pièce fonctionnelle (401) dudit dispositif d'enregistrement optique (400), afin de basculer celui-ci autour d'un axe (407), par une rotation de ladite roue dentée de basculement (60) par laquelle l'axe (407) du dispositif d'enregistrement optique est supporté à pivotement sur ladite plate-forme (300), le disque de came (30) ayant trois parties destinées, respectivement, à déplacer le plateau de disque (202), lever et abaisser le dispositif de serrage (200) et faire tourner la roue dentée de basculement (60).

2. Le lecteur de disque laser selon la revendication 1, dans lequel une fente d'insertion (103), ayant une extrémité ouverte, est formée sur le cadre latérale (101) dudit châssis (100), la plaque latérale (10) ayant une forme de guidage (11) étant montée sur une face de guidage (104) du cadre latéral (101), une fente d'assemblage (12) étant formée à une extrémité de ladite fente de guidage (11) de ladite plaque latérale, et un axe de guidage (206) dudit plateau de console (203) étant guidé le long de ladite fente d'assemblage (12) de manière à être assemblé avec ladite fente de guidage dudit châssis et ladite plaque latérale (10).

3. Le lecteur de disque laser selon la revendication 2, dans lequel une nervure de guidage (13) est formée sur la bordure extérieure de ladite fente de guidage (11) de ladite plaque latérale (10).

4. Le lecteur de disque laser selon la revendication 1 ou 2, dans lequel un ressort en forme de plaque (207) est fixé au centre de ladite plaque (204) par un support (208), et une griffe (209) étant montée sur ledit support pour presser le disque.

5. Le lecteur de disque laser selon l'une des revendications 1 à 4, dans lequel une ouverture (205) est formée au centre dudit plateau de console (203), pour faire tourner une poulie (16).

6. Le lecteur de disque laser selon- la revendication 1, dans lequel une première partie dentée (21) et une deuxième partie dentée (22) sont formées sur la bordure extérieure d'une face supérieure et inférieure de ladite première roue dentée de plateau (20), avec une partie bossage (23) ayant une face de verrouillage et trois facettes d'étagement formées entre lesdites première et deuxième parties dentées (21, 22).

7. Le lecteur de disque laser selon la revendication 6, dans lequel une marque (21a) est formée sur la face supérieure de ladite première partie dentée (21) dudit de ladite roue dentée de plateau (20), espacée d'un angle prédéterminé vis-à-vis de l'axe Y-Y.

8. Le lecteur de disque laser selon la revendication 1 ou 2, dans lequel l'organe de came est une fente en forme de came (31) constituée sur la face supérieure dudit disque de came (30), afin de différencier une section de déplacement (I), une section de serrage (II) du plateau de disque (202) et une section de basculement (III) du dispositif optique (400), et des première, deuxième et troisième fentes formant came (33a, b, c) étant formées à la face inférieure dudit disque de came, dans lequel une tige de guidage (41) dudit levier (40) est guidée sur la fente de came (31), et des tiges de guidage (51a, b, c) des leviers de commutation (50a, b, c) étant guidées sur des première, deuxième et troisième fentes de came (33a, b, c).

9. Le lecteur de disque laser selon la revendication 8, dans lequel une partie dentée (35) est formée sur la bordure extérieure de ladite troisième fente formant came (33c) et des deuxième et troisième parties (36, 37) sont formées sur la bordure extérieure dudit disque formant came (30), dans lequel lesdites première, deuxième et troisième parties engrenage (35, 36, 37) sont susceptibles d'être mises en prise avec une roue dentée (17a,17b), afin de transférer une puissance de rotation de la poulie (16), de ladite roue dentée de plateau (20) et de ladite roue dentée de basculement (60), respectivement.

10. Le lecteur de disque laser selon la revendication 8, dans lequel une partie d'espace (31a) plus large est formée à une extrémité de ladite fente formant came (31) dans ledit organe rotatif (30).

11. Le lecteur de disque laser selon la revendication 8, dans lequel une nervure (32), ayant une partie à flexion (32a) en une position prédéterminée espacée de l'axe Y-Y, est formée sur la bordure extérieure de ladite fente formant came (31), dans ledit disque de came (30).

12. Le lecteur de disque laser selon la revendication 8, dans lequel des trous d'assemblage (34a, b, c) sont respectivement formés dans lesdites première, deuxième et troisièmes fentes formant came (33a, b, c), de manière que lesdites tiges de guidage (51a, b, c) desdits leviers de commutation (50a, b, c) y soient insérés.

13. Le lecteur de disque laser selon la revendication 12, dans lequel lesdites tiges de guidage (51a, b, c) sont formées au centre desdits leviers de commutation (50a, b, c), de manière qu'ils soient déplacés librement sur ladite plate-forme (300), en étant en contact avec le bouton (54) de l'interrupteur de mode (53) pour effectuer l'opération marche/arrêt.

14. Le lecteur de disque laser selon la revendication 1, dans lequel lesdites parties extrémité (42) à coulissement sont formées avec un angle de basculement prédéterminé aux deux extrémités dudit levier (40), et des trous d'assemblage (43, 44a) connectés à des fentes longues (43, 44) sont formés en des positions prédéterminées dudit levier, de manière que lesdits trous d'assemblage puissent facilement être assemblés avec ou séparés des tiges de fixation (45a, b).

15. Le lecteur de disque laser selon la revendication 1, dans lequel des première, deuxième et troisième fentes de basculement (61a, b, c) sont formées à une forme spirale sur la face supérieure de ladite roue dentée de basculement (60), et une partie dentée (62), destinée à la mise en prise avec la troisième partie dentée (37) dudit disque formant came (30), étant formée sur la bordure extérieure de la face inférieure de ladite roue dentée de basculement.

16. Le lecteur de disque laser selon la revendication 15, dans lequel une pièce support (63) et une tige (64) s'étendant radialement, pour la mise en prise avec une bordure extérieure dudit disque formant came (30) et avec une extrémité d'un levier (70), respectivement, sont respectivement formées sur la partie engrenage (62) de ladite roue dentée de basculement (60).

17. Le lecteur de disque laser selon la revendication 16, dans lequel ledit levier (70) est monté sur ladite plate-forme (30), pour être entraîné en rotation et centré sur une tige de fixation (71) formée sur la face inférieure, et une extrémité d'un ressort (73) étant fixée à une pièce de fixation (72a) formée à une extrémité.
